Europäisches Patentamt

European Patent Office

Office européen des brevets

(19)

(11) Veröffentlichungsnummer : **0 128 326**
**B1**

(12) **EUROPÄISCHE PATENTSCHRIFT**

(45) Veröffentlichungstag der Patentschrift :
27.07.88

(51) Int. Cl.⁴ : **C 01 B 25/12, C 01 B 25/20**

(21) Anmeldenummer : 84104913.3

(22) Anmeldetag : 02.05.84

(54) **Verfahren zur Herstellung von Phosphorpentoxid und gegebenenfalls Phosphorsäure unter Ausnutzung der Reaktionswärme.**

(30) Priorität : 13.05.83 DE 3317497

(43) Veröffentlichungstag der Anmeldung :
19.12.84 Patentblatt 84/51

(45) Bekanntmachung des Hinweises auf die Patenterteilung : 27.07.88 Patentblatt 88/30

(84) Benannte Vertragsstaaten :
**AT CH DE FR GB IT LI NL**

(56) Entgegenhaltungen :
EP-A- 0 037 735
EP-A- 0 046 865
US-A- 1 818 644
Patent Abstracts of Japan, vol. 3, no. 104, 4 September 1979, Seite 140C57
LUEGER: "Lexikon der Energietechnik und Kraftmaschinen", Band 6, S. 162-165
KIRK-OTHMER: "Encyclopedia of Chemical Technology", 3. Auflage, Band 21, S. 537
WINNACKER-KÜCHLER: "Chemische Technologie" Band 1, Anorganische Technologie I, 1970, S. 393
ULLMANNS Encyclopädie der technischen Chemie", 4. Auflage, Band 18, 1973, S. 303.

(73) Patentinhaber : **HOECHST AKTIENGESELLSCHAFT**
**Postfach 80 03 20**
**D-6230 Frankfurt am Main 80 (DE)**

(72) Erfinder : **Kuxdorf, Bernhard**
**von Westerburg-Strasse 12**
**D-5040 Brühl (DE)**
Erfinder : **Luhr, Peter**
**Wachendorfer Weg 1**
**D-5358 Bad Münstereifel (DE)**
Erfinder : **Thümmler, Ursus, Dr.**
**Am Kapellenbusch 27**
**D-5042 Erftstadt (DE)**
Erfinder : **Werner, Hugo**
**Brunhildstrasse 11**
**D-5030 Hürth (DE)**
Erfinder : **Klemm, Walter**
**Im Grund 2**
**D-6941 Rippenweier (DE)**

**Beschreibung**

Aus der EP-A-0 046 865 ist bereits ein Verfahren zur Herstellung von Phosphorpentoxid durch Verbrennen von elementarem Phosphor mit Hilfe von Luft unter Ausnutzung der Reaktionswärme zur Energiegewinnung bekannt, welches dadurch gekennzeichnet ist, daß man die Phosphorverbrennung mit getrockneter Luft mit einem Wassergehalt von 5 bis 0,01 g/m³ Luft in einer Brennkammer durchführt, deren metallische Wände zu einem Hohlräume aufweisenden Kühlsystem ausgebildet sind, wobei in dem Kühlsystem eine als Wärmeträger für die Reaktionswärme geeignete Flüssigkeit bzw. ein Flüssigkeits-Dampfgemisch unter Erwärmung auf Temperaturen von über 150-500 °C bei Drücken von 1-150 bar im Kreislauf geführt wird ; daß man den im Kühlsystem entstandenen Dampf aus letzterem kontinuierlich abzieht und durch eine äquivalente Menge frischer Flüssigkeit ersetzt, und daß man die aus der Brennkammer entweichenden heißen P₂O₅-Dämpfe kondensiert oder zu Folgeprodukten weiterverarbeitet. Die im Kreislauf geführte Flüssigkeit ist bevorzugt Wasser. Die Wände bzw. das Kühlsystem der Brennkammer können aus nichtrostendem Stahl bestehen. Bevorzugt bestehen die Wände der Brennkammer bzw. das Kühlsystem aus einer metallischen Rohrwand mit direkt verschweißten Rohren, einer Flossenrohrwand oder einer Membranrohrwand. Die einzelnen Rohre können vertikal oder horizontal angeordnet sein. Die Phosphorpentoxiddämpfe verlassen die Brennkammer mit einer Temperatur von 300 bis 1 000 °C und können zu Phosphorsäure weiterverarbeitet werden.

Weiterhin ist aus der EP-A-0 037 735 ein Verfahren zur Wärmerückgewinnung bei der Verbrennung elementaren Phosphors in Gegenwart von Wasser sowie die Herstellung von Ultraphosphorsäure bekannt. Hierbei streicht der P₂O₅ enthaltende Produktstrom an einer metallischen Kühlschlange vorbei, durch die eine Wärmeübertragungsflüssigkeit fließt, welche die Oberfläche der Kühlschlange auf 100 °C bis 900 °C hält.

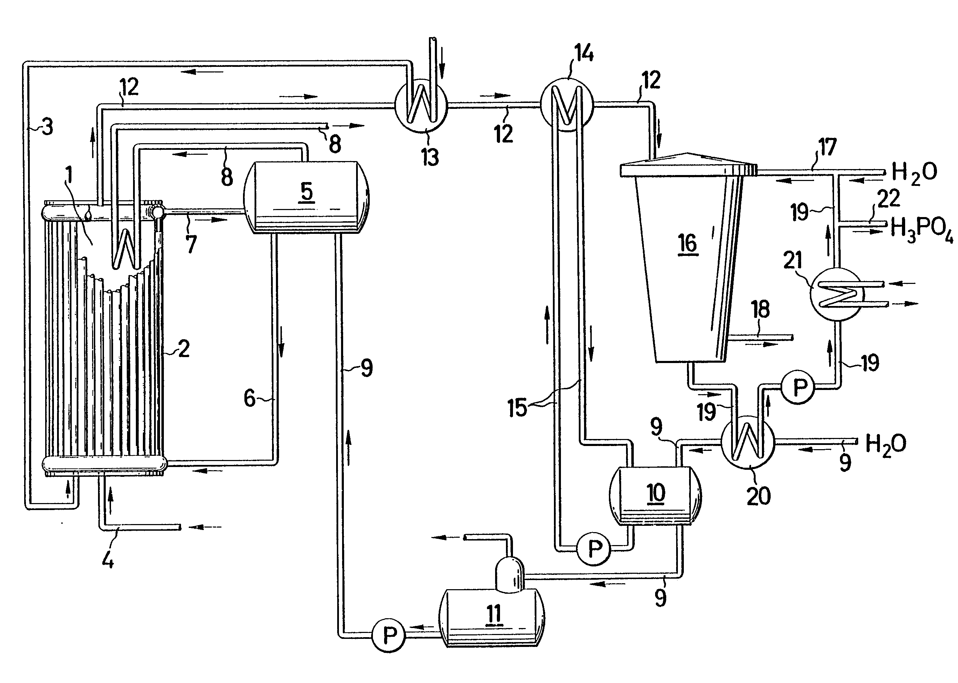

In der JP-A-54-84890 wird eine Vorrichtung mit einem Verbrennungsofen beschrieben, in welchem flüssiger Phosphor mit trockener Luft zu Phosphorpentoxid verbrannt wird und Temperaturen bis 2 000 °C entstehen. Die Ofenwand ist von einem Kühlsystem aus Rohren umgeben, wodurch das Reaktionsprodukt auf 800 bis 1 000 °C gekühlt wird. Figur 2 zeigt, daß die Ofenwand vom Kühlmittel in einem Kreislauf (11, 10, 9, 8, 9, 15, 12) durchströmt wird, wobei in diesen Kreislauf ein Dampfabscheider 12 eingeschaltet ist. Ein zweiter, parallel geschalteter Kühlkreislauf (11, 10, 9, 17, 9, 15, 12) kühlt zusätzlich den oberen, verengten Bereich des Verbrennungsofens 7.

Aus der älteren, nicht vorveröffentlichten DE-A-33 15 630 (EP-A-0 126 926) ist ein Verfahren und eine Vorrichtung zur Herstellung von Phosphorpentoxid unter Ausnutzung der Reaktionswärme bekannt, wobei die Brennkammer ein zylindrischer Behälter mit einem Längenverhältnis von Höhe zu Durchmesser von 2,5 : 1 bis 5 : 1 ist und in der kreisförmigen Bodenplatte 1 bis 10 Brenner axialsymmetrisch angeordnet sind. Auf diese Weise bleiben die wärmeübertragenden Flächen belagfrei oder werden nur von einem geringfügigen, gleichmäßigen Belag überzogen. Gemäß dem dortigen Beispiel werden 65 % der bei der Verbrennung freiwerdenden Reaktionswärme durch die stählernen Rohrwände auf das als Wärmeträger fungierende Wasser übertragen, welches dabei teilweise verdampfte.

Schließlich wird in der Literatur über Versuche berichtet, die bei der Verbrennung von gelbem Phosphor anfallende Verbrennungswärme zu gewinnen und analog zur Schwefelverbrennung Dampf zu erzeugen. Solche Versuche sind bisher aus Gründen der Korrosion und wegen der Notwendigkeit, oberhalb des P₄O₁₀-Taupunktes zu arbeiten, gescheitert. Dabei liegen die Sublimationstemperaturen der verschiedenen Modifikationen des P₄O₁₀ zwischen 360 und 580 °C (vergleiche WINNACKER-KÜCHLER : « Chemische Technologie », Band 1, Anorganische Technologie I, 1970, Seite 393 ; « Ullmanns Encyklopädie der technischen Chemie », 4. Auflage, Band 18, 1979, Seite 303).

Verfahren und Vorrichtung gemäß der vorliegenden Erfindung ermöglichen es nun, die Reaktionswärme weitgehend auszunutzen, insbesondere dann, wenn das im Produktgas enthaltene Phosphorpentoxid unmittelbar zu Phosphorsäure umgesetzt wird.

Im einzelnen betrifft die Erfindung ein Verfahren zur Herstellung von Phosphorpentoxid durch Verbrennen von elementarem Phosphor mit getrockneter Luft in einer Brennkammer aus nichtrostendem Stahl unter Ausnutzung der Reaktionswärme zur Energiegewinnung, wobei man die Verbrennung unter Bildung von heißem, gasförmigem Phosphorpentoxid in der Brennkammer vornimmt, deren Wandung zu einem Hohlräume aufweisenden Kühlsystem ausgebildet ist, und wobei in dem Kühlsystem Wasser oder ein Wasser/Dampf-Gemisch als Wärmeträger unter Erwärmung auf Temperaturen von 100 bis 370 °C bei Drucken von 1 bis 220 bar im Kreislauf geführt wird, und wobei man den im Kühlsystem entstandenen Wasserdampf kontinuierlich abzieht und durch eine äquivalente Menge entsalztes Frischwasser ersetzt, und wobei man das aus der Brennkammer gasförmig entende heiße Phosphorpentoxid kondensiert oder zu Folgeprodukten weiterverarbeitet, welches dadurch gekennzeichnet ist, daß man das aus der Brennkammer mit einer Temperatur von 500 bis 1 000 °C gasförmig abströmende Phosphorpentoxid zunächst im Wärmeaustausch zum Vorheizen der zur Verbrennung des elementaren Phosphors erforderlichen trockenen Luft auf Temperaturen von 70 bis 300 °C verwendet ; daß man weiterhin das gasförmig abströmende Phosphorpentoxid im Wärmeaustausch zum Vorheizen von vollentsalztem, entgastem, zum Einführen in das Kühlsystem vorgesehenem Frischwasser auf Temperaturen von 50 bis 200 °C verwendet; und daß man schließlich den aus dem Kühlsystem abströmenden Wasserdampf durch einen im oberen Bereich der Brennkammer angeordneten Wärmeaustauscher führt und dadurch mit dem gasförmigen Phosphorpentoxid in Berührung bringt, wobei der Wasserdampf in dem Wärmeaustauscher unter konstantem Druck auf Temperaturen von 400 bis 600 °C unter Bildung von überhitztem Wasserdampf aufgeheizt wird.

Das erfindungsgemäße Verfahren kann weiterhin wahlweise auch noch dadurch ausgestaltet sein, daß

a) man die heiße, höher konzentrierte Phosphorsäure, welche durch Adsorption des dampfförmigen Phosphorpentoxid in Phosphorsäure erhalten wurde, zur Vorheizung des vollentsalzten Frischwassers auf Temperaturen von 40 bis 80 °C verwendet;

b) das vollentsalzte, entgaste Frischwasser einen Sauerstoffgehalt von 0,01 bis 0,1 mg/l und einen Chloridgehalt von 0,01 bis 0,5 mg/l aufweist.

Eine Vorrichtung zur Durchführung des Verfahrens gemäß der Erfindung, welche aus einer Brennkammer aus rostfreiem Stahl mit Zuleitungen für flüssigen gelben Phosphor und für getrocknete Luft besteht, wobei die Wandung der Brennkammer als Hohlräume aufweisendes Kühlsystem ausgebildet ist sowie aus einem mit dem Kühlsystem strömungsmäßig verbundenen Dampfabscheider mit einer Zuleitung für Frischwasser und mit einer Ableitung für Dampf und aus einem Adsorptionsturm aufgebaut ist, welcher mit der Brennkammer über eine Produktgasleitung verbunden ist und welcher eine Kreislaufleitung für Phosphorsäure mit Pumpe und Kühler umfaßt, kann dadurch gekennzeichnet sein, daß in der Produktgasleitung ein erster Wärmeaustauscher und ein zweiter Wärmeaustauscher angeordnet sind; daß in den ersten Wärmeaustauscher ein Zuführungsrohr für getrocknete Luft einmündet und die Zuleitung für vorgeheizte getrocknete Luft zur Brennkammer abgeht; und daß die Zuleitung für Frischwasser über Rohre mit dem zweiten Wärmeaustauscher strömungsmäßig verbunden ist.

Diese Vorrichtung kann wahlweise auch noch dadurch weitergebildet sein, daß

c) in der zum Adsorptionsturm gehörenden Kreislaufleitung ein dritter Wärmeaustauscher angeordnet ist, durch welchen die mit dem Dampfabscheider verbundene Zuleitung für Frischwasser führt;

d) ein Kreislaufbehälter vorgesehen ist, in dessen Oberseite ein Rohr und die Frischwasser-Leitung einmünden, während von seiner Unterseite das andere Rohr und die Zuleitung für Frischwasser abgehen;

e) in der Zuleitung für Frischwasser ein Entgasungsbehälter angeordnet ist;

f) in den Entgasungsbehälter eine Lanze zur Zuführung von Sattdampf eingesetzt ist.

Das Verfahren der Erfindung wird im folgenden beispielhaft anhand des beigefügten Fließschemas näher erläutert:

Die zylindrische Brennkammer (1) mit einem bevorzugten Längenverhältnis von Höhe zu Durchmesser von 2,5 : 1 bis 5 : 1 und aus nichtrostendem Stahl gefertigt, wird von einer von Kühlwasser durchflossenen Wandung (2) aus vorzugsweise senkrecht aneinandergeschweißten Rohrabschnitten, einer Flossenrohrwand oder einer Membranrohrwand begrenzt. Über Leitung (3) wird getrocknete, auf 70 bis 300 °C vorgeheizte Luft, vorzugsweise in einem stöchiometrischen Überschuß von 1-40 %, und über Leitung (4) flüssiger, gelber Phosphor durch die untere Bodenplatte, welche einen oder mehrere axialsymmetrisch angeordnete (nicht gezeichnete) Brenner trägt, in die Brennkammer (1) eingespeist. Der Druck in der Brennkammer (1) beträgt 0,8 bis 10 bar. Der oder die Brenner sind ausgerüstet entweder mit Einstoffdüsen, durch welche flüssiger Phosphor mit einem Druck von 5-50 bar in die Brennkammer eintritt, oder mit Zweistoffdüsen für flüssigen Phosphor und Zerstäubungsluft, wobei die Zerstäubungsluft mit einem Druck von 2-6 bar in die Brennkammer eintritt. Die Brennkammer kann mit einer Heizflächenbelastung von 50 bis 150 KW/m² und mit einer Heizvolumenbelastung von 300 bis 600 KW/m³ betrieben werden.

Das Kühlwasser wird im Kreislauf aus dem Dampfabscheider (5) über die Zuleitung (6) durch die Wandung (2) und die Ableitung (7) wieder zurück in den Dampfabscheider (5) geführt, wobei es eine Temperatur zwischen 100 und 370 °C bei Drücken von 1-220 bar annimmt. Der bei jedem Durchgang neu entstehende Wasserdampf (Sattdampf) wird über Leitung (8), die durch den oberen Bereich der Brennkammer (1) hindurchgeführt wird, abgezogen und dabei unter konstantem Druck auf 400-600 °C aufgeheizt. Dieser überhitzte Wasserdampf kann anschließend zum Antreiben von Turbinen für die Stromerzeugung benutzt werden.

In dem Maße, wie über Leitung (8) überhitzter Wasserdampf abgezogen wird, wird über Leitung (9) vollentsalztes Frischwasser mit einer Temperatur von 50 bis 200 °C aus einem Kreislaufbehälter (10) in den Dampfabscheider (5) zugepumpt. Hierbei durchströmt das Frischwasser den Entgasungsbehälter (11), in welchem eine Entgasung mit hindurchgeleitetem Sattdampf erfolgt. Das in den Dampfabscheider (5) eintredende Frischwasser ist deshalb auch entgast.

Das Produktgas, welches $P_2O_5$, $O_2$ und $N_2$ enthält, verläßt die Brennkammer (1) über Leitung (12) mit einer Temperatur von 500-1 000 °C und heizt im Wärmetauscher (13) die der Brennkammer über Leitung (3) zuströmende getrocknete Luft auf 70-300 °C vor. Anschließend gibt das Produktgas im Wärmetauscher (14) weitere Wärme an einen gesonderten Kühlwasserkreislauf (15) ab, der mit dem Kreislaufbehälter (10) in Verbindung steht. Auf diese Weise wird das über Leitung (9) herangeführte Frischwasser auf die im Brennkammerkreislauf (5, 6, 2, 7, 5) benötigte Betriebstemperatur vorgeheizt.

Die Produktgase gelangen schließlich mit einer Temperatur von 300 bis 800 °C in den Säureturm (16), wo sie mit Phosphorsäure aus Leitung (17) abgeschreckt werden. Die im wesentlichen aus Stickstoff und Sauerstoff bestehenden Restgase werden über Leitung (18) abgezogen. Die gebildete höher konzentrierte Phosphorsäure verläßt den Säureturm (16) über Leitung (19) und wird im Wärmetauscher (20) durch das über Leitung (9) heranströmende Frischwasser indirekt gekühlt. Das so vorgewärmte Frischwasser gelangt in den Kreislaufbehälter (10), während die höher konzentrierte Phosphorsäure ggf. im Kühler (21) noch weiter abgekühlt werden kann, bevor sie teils über Leitung (22) als Produkt abgezogen, teils unter Verdünnung mit Wasser über Leitung (17) dem Kopf des Säureturms (16) erneut im Kreislauf zugeführt wird.

Es ist auch möglich, den Kreislaufbehälter (10) einzusparen und das Frischwasser aus Leitung (9) nach Vorwärmung im Wärmetauscher (20) direkt durch den Wärmetauscher (14) und dann in den Entgasungsbehälter (11) einzuleiten.

Beispiel

In der zylindrischen Brennkammer (1) aus nichtrostendem Stahl und mit einem Längenverhältnis von Höhe zu Durchmesser von 4 zu 1 wurden je Stunde 210 kg elementarer, flüssiger, gelber Phosphor (Temperatur 75 °C) mit getrockneter und vorgewärmter Zerstäubungsluft von 5 bar Druck verbrannt.

In der Bodenplatte der Brennkammer (1) war ein einzelner Brenner zentrisch angeordnet und nach oben gerichtet. Er war als Zweistoffdüse für Phosphor und Zerstäubungsluft ausgebildet. Die getrocknete Zerstäubungsluft wurde im Wärmetauscher (13), der in der Produktgasleitung (12) eingebaut war, auf 105 °C vorgewärmt. Der stöchiometrische Luftüberschuß betrug 20 %. In der Brennkammer (1) herrschte ein Druck von 1,5 bar.

Die bei der Verbrennung des Phosphors freiwerdende Reaktionswärme von 4 GJ/h wurde zu 65 % auf das in der Rohrwand (2) der Brennkammer (1) als Wärmeträger zirkulierende vollentsalzte und entgaste Kühlwasser (Chloridgehalt = 0,05 mg/l; Sauerstoffgehalt = 0,04 mg/l; pH-Wert = 9) übertragen. Hierbei trat eine teilweise Verdampfung des Wassers ein.

Das Wasser-Dampfgemisch stieg durch die Rohrwand (2) über ein Sammelrohr und Leitung (7) in den Dampfabscheider (5), in welchem die Trennung von Dampf und Flüssigkeit stattfand.

Der erzeugte Sattdampf wurde in einer Menge von 1,4 t/h über Leitung (8) abgezogen und durch die 850 °C heißen $P_2O_5$-haltigen Produktgase auf 450 °C aufgeheizt. Der Dampfdruck wurde auf 80 bar gehalten.

Die flüssige Phase im Dampfabscheider (5) mit einer Temperatur von 295 °C wurde über die Rücklaufleitung (6) der Rohrwand (2) wieder zugeführt. Damit war der Kreis des Wasserumlaufs, bewirkt durch die Dichteunterschiede im Umlaufsystem, geschlossen.

Eine Niveauregelung in Verbindung mit einer in Leitung (9) installierten Pumpe gewährleistete, daß das Kühlsystem stets mit ausreichend Wasser versorgt war. Die Frischwasserzusätze in Höhe der verdampften Wassermenge von 1,4 t/h erfolgten aus dem Kreislaufbehälter (10).

Das vollentsalzte Frischwasser (1,4 t/h) wurde im Wärmetauscher (20) auf 60 °C vorgewärmt. Eine in die Kreislaufleitung (15) eingebaute Umwälzpumpe versorgte den in der Produktgasleitung (12) vorgesehenen zweiten Wärmetauscher (14) ständig mit Frischwasser aus dem Kreislaufbehälter (10). In diesem Wärmetauscher (14) erwärmte sich das Wasser weiter bis auf 75 °C. Der Kühlwasserkreislauf (10, 15, 14), umfaßte ein Volumen von 2,5 t Wasser. Im Entgasungsbehälter (11) fand eine Entgasung des Wassers statt, die durch Einleiten von Sattdampf bewirkt wurde, wodurch gleichzeitig die Kühlwassertemperatur auf 102 °C bei einem Druck von 1,01 bar anstieg.

Die $P_2O_5$-haltigen Produktgase verließen die Brennkammer (1) mit 850 °C. In der Produktgasleitung (12) kühlten sie an der Dampfleitung (8) sowie an den Wärmetauschern (13) und (14) vor Eintritt in den Säureturm (16) auf 350 °C ab, wodurch etwa 20 % der Reaktionswärme zurückgewonnen wurden.

Der Umsatz des gelben Phosphors war quantitativ, so daß 1 025 m³/h Produktgas im Normzustand mit 7,4 Vol % $P_2O_5$ in den Säureturm (16) gelangten. Hier wurde das $P_2O_5$ in Wasser und Umlaufphosphorsäure entsprechend einer 87 masseprozentigen Phosphorsäure bei 75 °C quantitativ zu 89 masseprozentiger Phosphorsäure absorbiert.

Die mit 85 °C aus dem Säureturm (16) ablaufende 89 masseprozentige Phosphorsäure gab im Wärmetauscher (20) ihre Wärme an das für den Kühlwasserkreislauf der Brennkammer (1) bestimmte Frischwasser ab, wodurch nochmals etwa 8 % der Reaktionswärme zurückgewonnen wurden.

Aus dem Säurekreislauf wurden 740 kg/h Phosphorsäure mit 89 Masse % $H_3PO_4$ und einer Temperatur von 75 °C, geregelt über den mit Kühlwasser beaufschlagten Wärmetauscher (21), über Leitung (22) abgezogen. Dafür mußten über Leitung (17) 260 kg/h Wasser dem Kreislauf neu zugesetzt werden.

**Patentansprüche**

1. Verfahren zur Herstellung von Phosphorpentoxid durch Verbrennen von elementarem Phosphor mit getrockneter Luft in einer Brennkammer aus nichtrostendem Stahl unter Ausnutzung der Reaktionswärme zur Energiegewinnung, wobei man die Verbrennung unter Bildung von heißem, gasförmigem Phosphorpentoxid in der Brennkammer vornimmt, deren Wandung zu einem Hohlräume aufweisenden Kühlsystem ausgebildet ist, und wobei in dem Kühlsystem Wasser oder ein Wasser/Dampf-Gemisch als Wärmeträger unter Erwärung auf Temperaturen von 100 bis 370 °C bei Drucken von 1 bis 220 bar im Kreislauf geführt wird, und wobei man den im Kühlsystem entstandenen Wasserdampf kontinuierlich abzieht und durch eine äquivalente Menge entsalztes Frischwasser ersetzt, und wobei man das aus der Brennkammer gasförmig entweichende heiße Phosphorpentoxid kondensiert oder zu Folgeprodukten weiterverarbeitet, dadurch gekennzeichnet, daß man das aus der Brennkammer mit einer Temperatur von 500 bis 1 000 °C gasförmig abströmende Phosphorpentoxid zunächst im Wärmeaustausch zum Vorheizen der zur Verbrennung des elementaren Phosphors erforderlichen trockenen Luft auf Temperaturen von 70 bis 300 °C verwendet ; daß man weiterhin das gasförmig abströmende Phosphorpentoxid im Wärmeaustausch zum Vorheizen von vollentsalztem, entgastem, zum Einführen in das Kühlsystem vorgesehenem Frischwasser auf Temperaturen von 50 bis 200 °C verwendet ; und daß man schließlich den aus dem Kühlsystem abströmenden Wasserdampf durch einen im oberen Bereich der Brennkammer angeordneten Wärmeaustauscher führt und dadurch mit dem gasförmigen Phosphorpentoxid in Berührung bringt, wobei der Wasserdampf in dem Wärmeaustauscher unter konstantem Druck auf Temperaturen von 400 bis 600 °C unter Bildung von überhitztem Wasserdampf aufgeheizt wird.

2. Verfahren nach Anspruch 1, dadurch gekennzeichnet, daß man die heiße, höher konzentrierte Phosphorsäure, welche durch Adsorption des dampfförmigen Phosphorpentoxid in Phosphorsäure erhalten wurde, zur Vorheizung des vollentsalzten Frischwassers auf Temperaturen von 40 bis 80 °C verwendet.

3. Verfahren nach Anspruch 1 oder 2, dadurch gekennzeichnet, daß das vollentsalzte, entgaste Frischwasser einen Sauerstoffgehalt von 0,01 bis 0,1 mg/l und einen Chloridgehalt von 0,01 bis 0,5 mg/l aufweist.

4. Vorrichtung zur Durchführung des Verfahrens nach den Ansprüchen 1 bis 3, bestehend aus einer Brennkammer aus rostfreiem Stahl mit Zuleitungen für flüssigen gelben Phosphor und für getrocknete Luft, wobei die Wandung der Brennkammer als Hohlräume aufweisendes Kühlsystem ausgebildet ist sowie aus einem mit dem Kühlsystem strömungsmäßig verbundenen Dampfabscheider mit einer Zuleitung für Frischwasser und mit einer Ableitung für Dampf und aus einem Adsorptionsturm besteht, welcher mit der Brennkammer über eine Produktgasleitung verbunden ist und welcher eine Kreislaufleitung für Phosphorsäure mit Pumpe und Kühler umfaßt, dadurch gekennzeichnet, daß in der Produktgasleitung (12) ein erster Wärmeaustauscher (13) und ein zweiter Wärmeaustauscher (14) angeordnet sind ; daß in den ersten Wärmeaustauscher (13) ein Zuführungsrohr für getrocknete Luft einmündet und die Zuleitung (3) für vorgeheizte getrocknete Luft zur Brennkammer (1) abgeht ; und daß die Zuleitung (9) für Frischwasser über Rohre (15) mit dem zweiten Wärmeaustauscher (14) strömungsmäßig verbunden ist.

5. Vorrichtung nach Anspruch 4, dadurch gekennzeichnet, daß in der zum Adsorptionsturm (16) gehörenden Kreislaufleitung (19, 17) ein dritter Wärmeaustauscher (20) angeordnet ist, durch welchen die mit dem Dampfabscheider (5) verbundene Zuleitung (9) für Frischwasser führt.

6. Vorrichtung nach Anspruch 4 oder 5, dadurch gekennzeichnet, daß ein Kreislaufbehälter (10) vorgesehen ist, in dessen Oberseite ein Rohr (15) und die Frischwasser-Leitung (9) einmünden, während von seiner Unterseite das andere Rohr (15) und die Zuleitung (9) für Frischwasser abgehen.

7. Vorrichtung nach einem der Ansprüche 4 bis 6, dadurch gekennzeichnet, daß in der Zuleitung (9) für Frischwasser ein Entgasungsbehälter (11) angeordnet ist.

8. Vorrichtung nach Anspruch 7, dadurch gekennzeichnet, daß in den Entgasungsbehälter (11) eine Lanze zur Zuführung von Sattdampf eingesetzt ist.

## Claims

1. Process for making phosphorus pentoxide by subjecting elemental phosphorus to combustion with dried air inside a stainless steel-made combustion chamber with utilization of the reaction heat for the production of energy, which comprises : effecting the combustion with the resultant formation of hot gaseous phosphorus pentoxide inside the combustion chamber the walls of which are arranged so as to form a cooling system with cavities therein ; circulating water or a water/steam-mixture as a heat carrier through the cooling system, the water or water/steam-mixture assuming a temperature of 100° to 370 °C, under a pressure of 1 to 220 bars ; continuously taking from the cooling system steam which is being formed therein, and replacing it by an equivalent proportion of desalted fresh water, condensing or transforming into derivatives the hot gaseous phosphorus pentoxide issuing from the combustion chamber, characterized in that the gaseous phosphorus pentoxide issuing from the combustion chamber with a temperature of 500° to 1 000 °C is used initially for preheating, in heat exchange, to 70° to 300 °C, the dried air necessary for the combustion of the elementary phosphorus ; in that said hot issuing gaseous phosphorus pentoxide is used for preheating, in heat exchange, said fully desalted degassed fresh water provided for introducing into the cooling system to 50° to 200 °C ; and in that the steam taken from the cooling system is passed through a heat exchanger arranged in the upper portion of the combustion chamber and in this way contacted with said hot gaseous phosphorus pentoxide, the steam in said heat exchange being heated to a temperature of 400° to 600 °C under constant pressure with the resultant formation of superheated steam.

2. Process as claimed in claim 1, wherein the hot more concentrated phosphoric acid obtained by adsorbing the gaseous phosphorus pentoxide with phosphoric acid is used for preheating said fully desalted fresh water to 40° to 80 °C.

3. Process as claimed in claim 1 or 2, wherein the fully desalted fresh water contains 0.01-0.1 mg/l oxygen and 0.01-0.5 mg/l chloride.

4. Apparatus for carrying out the process as claimed in claims 1 to 3, comprised of a steel-made combustion chamber having its walls arranged so as to form a cooling system with cavities therein and provided with inlets for admitting liquid yellow phosphorus and dried air, and of a steam separator connected, in the direction of flow, to the cooling system, and provided with a fresh water inlet and a steam outlet ; and of an adsorption tower, connected by means of a product gas line to the combustion chamber and provided with a phosphoric acid circulation pipe fitted with a pump and cooler, characterized in that a first heat exchanger (13) and a second heat exchanger (14) are disposed in product gas line (12) ; in that an inlet for admitting dried air is arranged so as to open into the first heat exchanger (13) and a conduit (3) for preheated dried air is arranged to run from exchanger (13) to combustion chamber (1) ; and in that fresh water inlet (9) is flow-connected through pipes (15) to the second heat exchanger (14).

5. Apparatus as claimed in claim 4, wherein a third heat exchanger (20) having the fresh water inlet (9) running to steam separator (5) passed through it, is disposed in cycle line (19, 17) forming part of adsorption tower (16).

6. Apparatus as claimed in claim 4 or 5, wherein a circulation tank (10) is provided into which open from above a first pipe (15) and a fresh water inlet (9), and extend from below the second pipe (15) and fresh water inlet (9).

7. Apparatus as claimed in any one of claims 4 to 6, wherein a degassing tank (11) is disposed in fresh water inlet (9).

8. Apparatus as claimed in claim 7, wherein a lance for admitting saturated steam is disposed in degassing tank (11).

## Revendications

1. Procédé de préparation de l'anhydride phosphorique par combustion de phosphore élémentaire avec de l'air séché, en utilisant la chaleur de réaction pour la production d'énergie, la combustion étant effectuée avec formation d'anhydride phosphorique gazeux chaud dans la chambre de combustion en acier inoxydable, dont les parois sont conçues de manière à former un système réfrigérant comportant des vides, dans lequel on fait circuler comme caloporteur en chauffant à des températures de 100-370 °C, sous des pressions de 1-220 bars, de l'eau ou un mélange vapeur/eau, on retire en continu du système réfrigérant la valeur formée et on la remplace par une quantité équivalente d'eau fraîche désalée et on condense ou on transforme en dérivés l'anhydride phosphorique gazeux chaud sortant de la chambre de combustion, caractérisé en ce que l'on utilise l'anhydride phosphorique gazeux sortant à une température de 500-1 000 °C de la chambre de combustion d'abord en échange de chaleur pour préchauffer à des températures de 70 à 300 °C l'air sec nécessaire à la combustion du phosphore élémentaire ; en ce que l'on utilise ensuite, en échange de chaleur, le pentoxyde de phosphore sortant à l'état gazeux pour préchauffer à des températures de 50-200 °C l'eau fraîche dégazée, complètement désalée, destinée à être introduite dans le système réfrigérant ; et en ce que l'on fait enfin passer la vapeur d'eau s'écoulant du système réfrigérant par un échangeur de chaleur disposé dans la partie supérieure de la chambre de combustion en la mettant ainsi en contact avec l'anhydride phosphorique gazeux, la vapeur d'eau étant ainsi réchauffée dans l'échangeur de chaleur à des températures de 400-600 °C sous pression constante avec formation de vapeur d'eau surchauffée.

2. Procédé selon la revendication 1, caractérisé en ce que l'on utilise l'acide phosphorique chaud de concentration plus élevée, obtenu par adsorption de l'anhydride phosphorique gazeux dans de l'acide phosphorique, pour préchauffer l'eau fraîche complètement désalée à des températures de 40-80 °C.

3. Procédé selon la revendication 1 ou 2, caractérisé en ce que l'eau fraîche complètement désalée présente une teneur en oxygène de 0,01-0,1 mg/l et une teneur en chlorure de 0,01-0,5 mg/l.

4. Appareillage pour la mise en œuvre du procédé selon l'une des revendications 1 à 3, consistant en une chambre de combustion en acier inoxydable, dont les parois sont conçues de manière à former un système réfrigérant comportant des vides, des tubes d'amenée de phosphore liquide et d'air séché, ainsi qu'un séparateur de vapeur, relié dans le sens de l'écoulement au système réfrigérant et muni d'un tube d'amenée d'eau fraîche et d'un tube de sortie de vapeur, et en une tour d'adsorption reliée par l'intermédiaire d'un tube d'amenée du gaz produit à la chambre de combustion et muni d'un tube de circulation d'acide phosphorique comportant une pompe et un réfrigérant, caractérisé en ce qu'un premier échangeur de chaleur (13) et un second échangeur de chaleur (14) sont disposés dans la conduite d'amenée du gaz produit (12) ; en ce qu'un tube d'amenée d'air séché débouche dans le premier échangeur de chaleur (13) et la conduite d'amenée d'air séché préchauffé (3) dans la chambre de combustion (1) part dudit premier échangeur ; et en ce que la conduite d'amenée d'eau fraîche (9) est reliée dans le sens de l'écoulement par l'intermédiaire de tuyaux (15) au second échangeur de chaleur (14).

5. Appareillage selon la revendication 4, caractérisé en ce qu'un troisième échangeur de chaleur (20) traversé par la conduite d'amenée d'eau fraîche (9) reliée au séparateur de vapeur (5) est disposé dans la conduite de circulation (19, 17) faisant partie de la tour d'adsorption (16).

6. Appareillage selon la revendication 4 ou 5, caractérisé en ce qu'un récipient de circulation (10) est prévu dans le haut duquel débouchent un tube (15) et la conduite d'amenée d'eau fraîche (9) et dans le bas duquel partent un second tube (15) et la conduite d'amenée d'eau fraîche (9).

7. Appareillage selon l'une des revendications 4 à 6, caractérisé en ce qu'un récipient de dégazage (11) est disposé dans la conduite d'amenée d'eau fraîche (9).

8. Appareillage selon la revendication 7, caractérisé en ce qu'une lance destinée à l'amenée de vapeur saturée est disposée dans le récipient de dégazage (11).